Europäisches Patentamt

(19) European Patent Office

Office européen des brevets

(11) Publication number: **0 336 455 B1**

(12) **EUROPEAN PATENT SPECIFICATION**

(45) Date of publication of patent specification :
15.05.91 Bulletin 91/20

(51) Int. Cl.⁵ : **B01D 46/10, B01D 46/12, F24F 13/00, B01D 46/52**

(21) Application number : 89110273.3

(22) Date of filing : 14.12.84

(54) Air cleaner.

(30) Priority : 16.12.83 JP 237545/83
19.12.83 JP 240565/83
14.06.84 JP 122323/84
04.05.84 JP 65885/84

(43) Date of publication of application :
11.10.89 Bulletin 89/41

(61) Publication number of the earlier application in
accordance with Art. 76 EPC : 0147143

(45) Publication of the grant of the patent :
15.05.91 Bulletin 91/20

(84) Designated Contracting States :
CH DE FR GB LI

(56) References cited :
DE-A- 2 835 104
GB-A- 1 178 519
US-A- 4 344 784

(73) Proprietor : NITTA CO., LTD.
55-1, 2-chome Hommachi
Higashi-ku Osaka (JP)

(72) Inventor : Metoku, Yoshiharu
3148 Fukai Kitamachi
Sakai-shi Osaka (JP)
Inventor : Uragami, Hisato
200-2, 2-chome Gakuendaiwa-cho
Nara-shi Nara (JP)
Inventor : Tamaki, Toshitaka
222-1, Ikezawa-cho
Yamatokooriyama-shi Nara (JP)
Inventor : Yoshimura, Keiji
55 Minamimitsubo Shinjo-cho
Kitakatsuragi-gun Nara (JP)

(74) Representative : Jones, Michael Raymond et al
HASELTINE LAKE & CO. Hazlitt House 28
Southampton Buildings Chancery Lane
London WC2A 1AT (GB)

## Description

This application is a divisional application of European Patent Application No. 84308738.8 (0147143).

This invention relates to a thin lightweight noiseless air cleaning system.

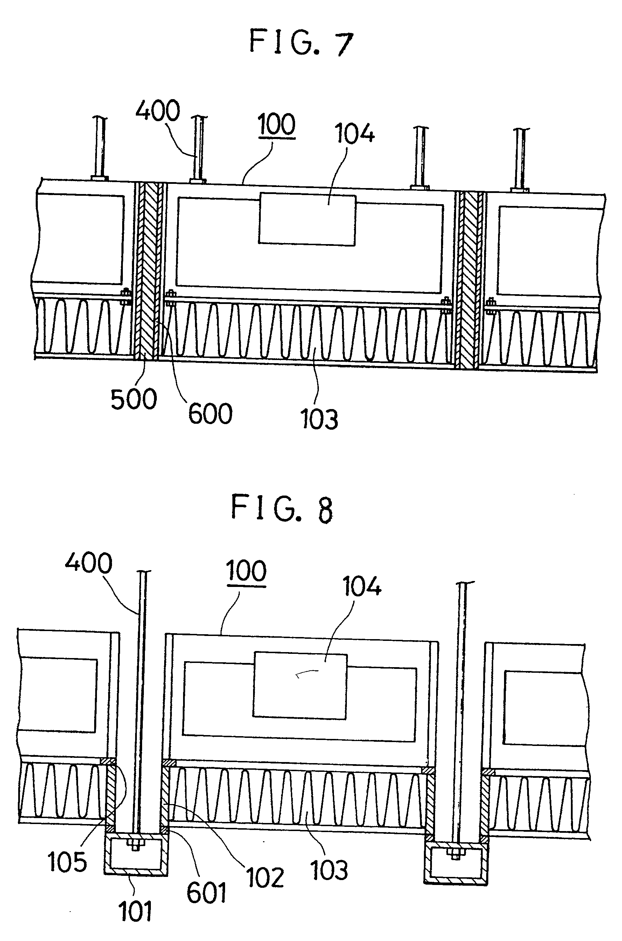

A sufficiently purified environment is required in precision machinery industries for the production of semiconductors, pharmaceutical industries, hospitals, research institutes in the field of biotechnology, etc.. Depending on the situation air quality might need to be controlled in a single bench area, in a regulated booth or even in an entire room. Air purification has been acomplished by, for example, an air cleaning system such as the one shown in Figure 7, which is composed of a plurality of filter units 100, each of which is fixed on supporters 400 from a ceiling (not shown). Spacers 500 and caulking compounds 600 must be positioned in the space between the filter units 100, making its installation complicated. The resulting sealing system is not enough to prevent a certain amount of air leakage. As shown in Figure 8, these units 100 may be installed on a ceiling by supporters 400, each of which has a rectangular frame 101. Although a gasket 601, such as a chloroprene sponge, is positioned between the filter frame 102 and the rectangular frame 101, air leakage therefrom cannot be avoided. Furthermore even the airtight connection 105 between the air filter module 103 and the fan module 104 in each unit 100 cannot prevent all air leakage.

In addition, the filter module 103 and the fan module 104 constituting the above-mentioned filter unit 100 are large and heavy, so that the filter unit 100 is correspondingly bulky and heavy as a whole thereby. Subsequently, the unit is noisy, difficult to install, inspect and repair. Replacement of parts such as the fan, filter, etc., are also difficult due to the size and weight.

GB-A-1.178.519 discloses an air cleaning system comprising a latticework of channels bounding a series of rectangular spaces in which a series of filter elements are positioned each of which has a surrounding frame provided with a continuous edge which rests in the surrounding channels. A liquid or solidified material is contained in the channels to prevent air from passing betweeen the channels and the continuous edges.

The thin leightweight air cleaning system of this invention which overcomes the above-discussed disadvantages and other numerous drawbacks of the prior art is as defined below.

(1) a latticework of interconnected H-shaped channels having their openings directed upwardly and a sealing liquid positioned therein,

(2) a plurality of air filter modules, each of which includes an air filter and has a surrounding frame containing a continuous U-shaped channel ; said U-shaped channel having an upwardly directed opening and a sealing liquid positioned therein, and said upward opening of said U-shaped channel receiving the lower rim of said H-shaped channel, and

(3) a plurality of fan modules, each of which includes a fan, a casing containing said fan therein and a housing containing said casing therein, and is disposed at the back of each of said air filter modules, said fan module having a surrounding frame containing a continuous vertically disposed extension which rests in the upward opening of said H-shaped channel.

The air filter module is preferably thin and lightweight. The fan module is, likewise, thin and lightweight.

The fan is preferably a propeller-type fan or a sirocco fan.

The housing is, in a preferred embodiment, provided with vibration and noise absorbers.

The fan is, in a preferred embodiment, provided with a resonance prevention device at its back.

Thus, the invention described herein is advantageous as it (1) provides an air cleaning system which has a high collection efficiency and an excellent ventilation ability ; (2) provides a noiseless air cleaning system ; (3) provides an air cleaning system, which is thin and lightweight ; (4) provides a small-sized air cleaning system which can be installed in a small space ; (5) provides an air cleaning system in which complete airtightness can be maintained ; (6) provides an air cleaning system wherein the fan module and/or the filter module can be readily exchanged for another without damaging the airtightness between both modules ; (7) provides an air cleaning system which are readily installed and repaired due to the use of a thin lightweight fan and filter modules, both of which are combined with each other by a simple sealing system ; (8) provides an air cleaning system which can be readily subjected to inspection and/or maintenance because of its simple structure and simple sealing system ; and (9) provides a system which is energysaving.

This invention may be better understood and its numerous objects and advantages will become apparent to those skilled in the art by reference to the accompanying drawings as follows :

Figures 1, 2 and 3, respectively, are a partly sectional back view, a partly sectional plan view and a partly sectional side view of an air cleaner suitable for use in the air cleaning system of this invention.

Figures 4 and 5, respectively, are a back view and a partly sectional side view of another air cleaner suitable for use in the air cleaning system of this invention.

Figure 6 is a partly sectional side view of an air cleaning system according to this invention.

Figures 7 and 8, respectively, are partly sectional side views of a conventional air cleaning system.

## DESCRIPTION OF THE PREFERRED EMBODIMENTS

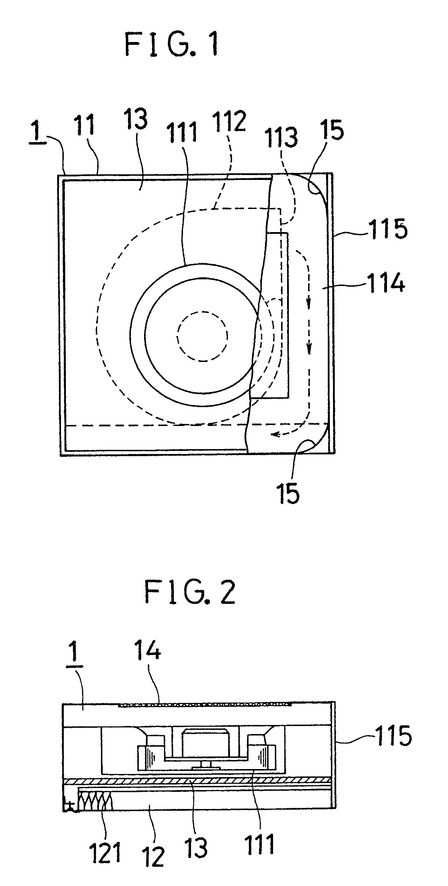

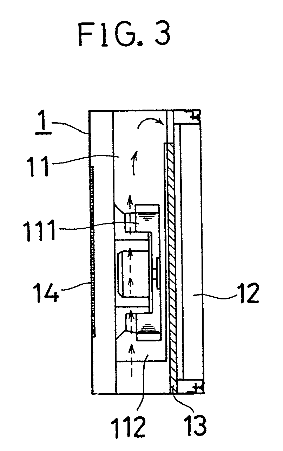

Figures 1, 2 and 3 shown an air cleaner 1 suitable for use in the air cleaning system of this invention, which comprises a fan module 11 having a sirocco fan 111, a casing 112 containing the fan 111 therein and a housing 114 containing the casing 112 therein ; and an air filter module 12 having an air filter 121. The thickness of the fan 111 (i.e., the thickness of the fan module 11) is 1/2 or less than that of the prior art, creating a thin air cleaner. The filter 121 has a collection efficiency of 99.97% with respect to dioctylphthalate particles of a size of 0.3 μm in a monodisperse system. An example of the filter 121 is an HEPA (High Efficiency Particulate Air) filter. The thickness of the filter module 12 containing such an HEPA filter is, for example, as thin as 100 mm or less, while that of a conventional filter module is 150 mm. A prefilter 14 can be positioned at the back of the fan 111 as desired. A guide vane 15 is positioned at each corner of the housing 114 to avoid turbulence from air discharged from the outlet 113 of the fan casing 112 as it collides with the wall 115 of the housing 114, forming a turbulent flow. The guide vane 15 can be a plastic board, etc., but is not limited thereto.

The air flow from the outlet 113 of the fan casing 112 is not uniform with respect to dynamic pressure thereof in the whole region of the outlet 113, because the rate of the air flow within the circular duct within the casing 112 is greater along the inner diameter of the duct than along the outer diameter thereof. While the air flow, having an ununiform dynamic pressure, reaches the filter 121, passing through the significantly long path between the fan casing 112 and the housing 114, the dynamic pressure is gradually reduced to a static pressure. In order to make the path of the air flow longer, a moderator 13, such as a plastic board, etc. is positioned between the fan module 11 and the filter module 12. While the air flow which is not uniform with respect to the dynamic pressure passes through the moderator 13 and the filter module 12, the dynamic pressure is reduced to a static pressure. The air flow having a reduced dynamic pressure collides with the whole back face of the filter 121 and passes therethrough with a uniform distribution flow rate.

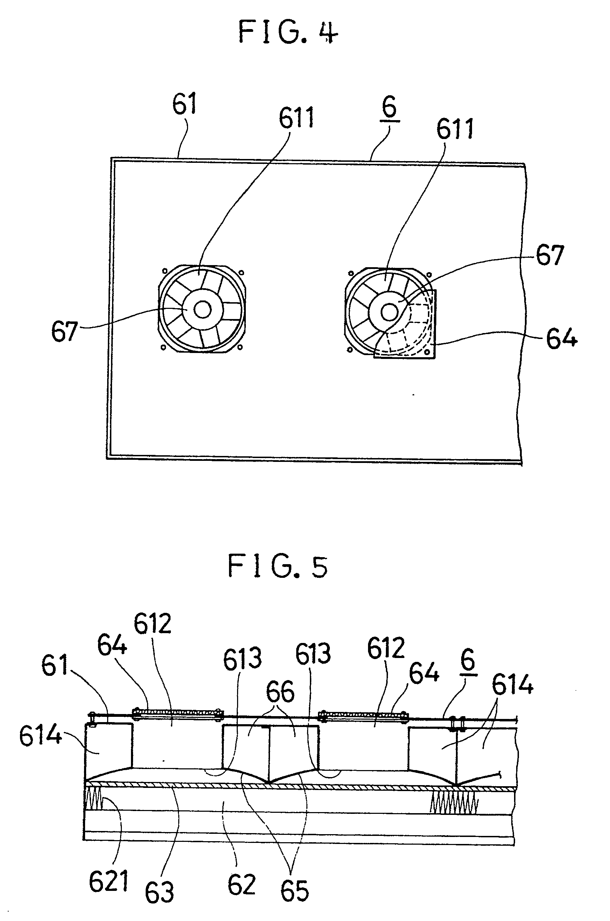

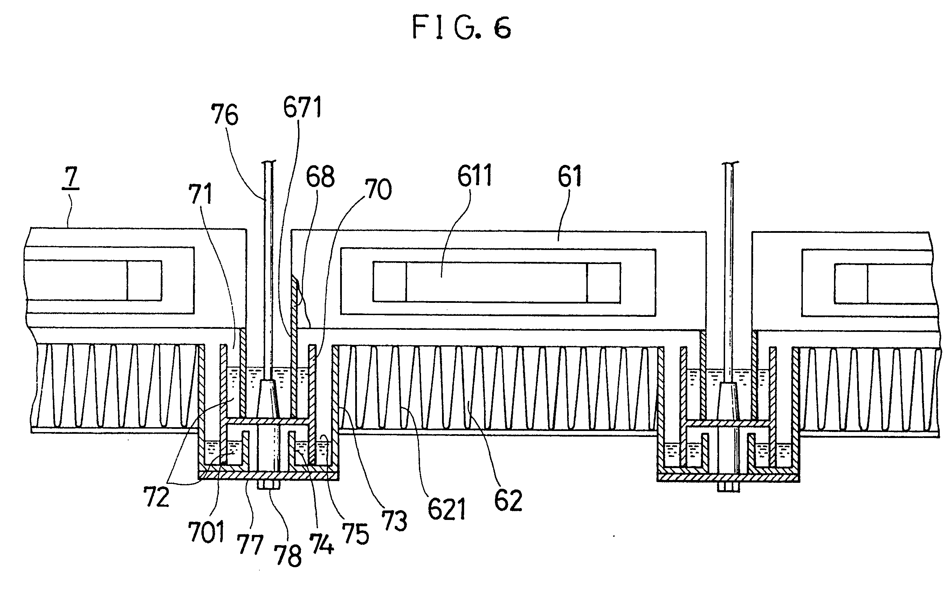

Another air cleaner 6 suitable for use in an air cleaning system according to this invention is shown in Figures 4 and 5, which comprises a fan module 61 having a propeller-type fan 611, a casing 612 of the fan 611 and a housing 614 containing the fan casing 612 therein, and an air filter module 62 having an air filter 621. A moderator 63 is positioned between the fan module 61 and the filter module 62. The space between the fan casing 612 and the housing 614 is partly or wholly filled with a vibration absorber and/or a noise absorber 66 made of a glass wool and/or a plastic foam such as a polyurethane foam, a polystyrene foam, etc. to reduce vibration and noise from the fan 611.

Since the fan 611 is a thin compact propeller fan, it can operate at a high speed, as compared with a conventional multiblade type-fan, thereby attaining a high ventilation efficiency and an excellent air-flow rate distribution.

The filter 621 in this cleaner 6 is the same as that used in the above-mentioned cleaner 1. A prefilter 64 may be positioned at the back of the fan casing 612 as desired.

Regulators 65 made of an involute- or paraboloid-shaped aluminum or plastic board, etc. are disposed from around the outlet 613 of the casing 612 to the ends of the back of the filter module 62, thereby preventing turbulence of the air flow from the outlet 613 of the fan casing 612 and guiding the air flow to the back of the filter 621. Thus, the ventilation efficiency of the fan 611 and the uniform distribution of the flow rate of the air from the fan 611 to the filter 621 can be maintained at a high level. The occurance of noise can be also reduced.

The moderator 63 between the fan module 61 and the filter module 62 serves to make the air-flow rate distribution more uniform. The moderator 63 is made of a porous plastic or aluminum board, etc. having a plurality of openings of a diameter of, for example, 2.5 mm comprising 30% of the surface area of the filter. Upon passing through the moderator 63, the air flow becomes streamlined as it flows downward. Instead of the moderator 63, a thin-type diffuser can be used.

Where a plurality of air cleaners 6 are installed on a ceiling, etc. as shown in Figure 6, the rotation number of each of the fans 611 varies according to a change in the voltage and/or loading thereby causing a rotation resonance which results in beats, vibrations and noise of the fan 611. In order to avoid such a rotation resonance, a resonance prevention device 67 such as a flywheel is mounted to the back of the fan 611. The resonance prevention device 67 rotates together with the fan 611, maintaining a stable rotation rate due to its inertia force so that surging due to noise interference can be reduced thereby attaining a decrease in a vibration and noise from the fan 611.

Figure 6 shows an air cleaning system 7 according to the present invention, which comprises (1) a latticework of interconnected H-shaped channels 70 having their openings 71 directed upwardly and a sealing liquid 72 positioned therein ; (2) a plurality of air filter modules 62 each of which has a surrounding frame 73 containing a continuous U-shaped channel 74, said U-shaped channel 74 having an upwardly directed opening 75 and a sealing liquid 72 positioned therein and said upwardly directed opening 75 of the U-shaped channel 74 receiving the lower rim 701 of said H-shaped channel 70 ; and (3) a plurality of fan modules 61, each of which has a surrounding frame 68 containing a continuous vertically disposed extension 671 which rests in the upwardly directed opening 71 of the H-shaped channel 70. This air cleaning system 7 further comprises a supporter 76, the end of which is connected to a portion such as a ceiling on which this cleaning system 7 should be installed and the other end of which is connected to a cover 77 by the use of a fastening means 78 such as a screw through the H-shaped channel 70, thereby mounting this air cleaning system 7 horizontally on a ceiling, etc.. The cover 77 also serves to keep the H-shaped channel 70 and the U-shaped channel 74 from sight.

The fan module 61 is the same as that used in the air cleaner 6 shown in Figures 4 and 5, or the fan module 11 which is used for the air cleaner 1 shown in Figure 1.

The filter module 62 maybe the same as that used in the air cleaner 1 shown in Figure 2 or the air cleaner 6 shown in Figure 5.

The H-shaped channel 70, the surrounding frames 68 and 73 of the fan module 61 and the filter module 62 respectively, and the continuous U-shaped channel 74 all are made of a metal such as aluminum, iron, etc., or a venner or a synthetic resin, but are no limited thereto. The sealing liquid 72 positioned in the openings 71 and 75 is a non-volatile sealant, preferablly having excellent adhesiveness and a long pot life, examples of which are modified-urethane derivatives and silicon derivatives.

Using the air cleaning system 7, a purified air can be created as follows :

As the fan 611 is driven, air is introduced from the outdoors into the back of this cleaning system 7 through a duct (not shown), entering the fan casing 612 through the prefilter 64, and is discharged from the outlet 613 of the casing 612 into the space before the casing 612. Since the fan module 61 is airtightly connected to the filter module 62 by the H-shaped channel 70, the air from the fan 611 can be introduced into the filter 621 through the porous moderator 63 without air leakage.

The discharged air from the fan casing 612 is fed into the porous moderator 63 without causing turbulence due to the regulator 65. The dynamic pressure of the air flow is significantly reduced during passage through the porous moderator 63, forming a streamlined downward flow which has a uniform distribution flow rate, when it reaches the back of the filter 621. The air is cleaned by the filter 621, attaining purified air in the room in which this cleaning system 7 is installed. Since the filter module 62 is also airtightly isolated from the outside by the H-shaped channel 70, untreated air from the outside cannot come into the room.

In order to control the amount of air passing through the filter 621, a non-porous board can be positioned between the fan module 61 and the filter module 62.

This air cleaning system 7 can be readily disassembled by loosing the fastening means 78 and removing in turn the cover 77, the filter module 62 and the fan module 61. After the removal of the filter module 62, the fan module 61 can be subjected to inspection from inside the room.

## Claims

1. An air cleaning system comprising :
(1) a latticework of interconnected H-shaped channels having their openings directed upwardly and a sealing liquid positioned therein ;
(2) a plurality of air filter modules, each of which includes an air filter and has a surrounding frame containing a continuous U-shaped channel ; said U-shaped channel having an upwardly directed opening and a sealing liquid positioned therein, and said upward opening of said U-shaped channel receiving the lower rim of said H-shaped channel ; and
(3) a plurality of fan modules, each of which includes a fan, a casing containing said fan therein and a housing containing said casing therein, and is disposed at the back of each of said air filter modules, said fan module having a surrounding frame containing a continuous vertically disposed extension which rests in the upward opening of said H-shaped channel.

2. An air cleaning system according to claim 1, wherein said air filter module is thin and lightweight.

3. An air cleaning system according to claim 1, wherein said fan module is thin and lightweight.

4. An air cleaning system according to claim 3, wherein said fan is a propeller-type fan.

5. An air cleaning system according to claim 3, wherein said fan is a sirocco fan.

6. An air cleaning system according to claim 3, wherein said housing of the fan module is provided with vibration and noise absorbers.

7. An air cleaning system according to claim 3, wherein said fan is provided with a resonance prevention device at its back.

8. An air cleaning system according to claim 7, wherein said resonance prevention device is a flywheel.

## Ansprüche

1. Luftreiniger mit :
(1) einem Gitterwerk aus miteinander verbundenen H-förmigen Kanälen, deren Öffnungen nach oben ausgerichtet sind und in denen eine Dichtflüssigkeit untergebracht ist ;

(2) einer Anzahl Luftfiltermodule, die jeweils einen Luftfilter und einen Außenrahmen haben, der jeweils einen fortlaufenden U-förmigen Kanal enthält, welcher U-förmige Kanal eine nach oben gerichtete Öffnung und eine darin vorgesehene Dichtflüssigkeit aufweist und wobei die nach oben gerichtete Öffnung des U-förmigen Kanals den unteren Rand des H-förmigen Kanals aufnimmt, und

(3) eine Anzahl Lüftermodule, die jeweils einen Lüfter, ein Lüftergehäuse und ein Gehäuse für das Lüftergehäuse aufweisen und an der Rückseite jedes der Luftfilter-Module angeordnet sind, wobei der Lüftermodul einen Außenrahmen hat, welcher eine fortlaufende, vertikal angeordnete Verlängerung enthält, welche in der nach oben gerichteten Öffnung des H-förmigen Kanals sitzt.

2. Luftreiniger nach Anspruch 1, bei welchem der Lüftermodul dünn und leicht ist.

3. Luftreiniger nach Anspruch 1, bei welchem der Luftfiltermodul dünn und leicht ist.

4. Luftreiniger nach Anspruch 3, bei welchem der Lüfter ein Propellergebläse-Lüfter ist.

5. Luftreiniger nach Anspruch 3, bei welchem der Lüfter ein Schirokko-Lüfter ist.

6. Luftreiniger nach Anspruch 3, bei welchem das Gehäuse des Lüftermoduls mit Vibrations- und Geräusch-Absorbern versehen ist.

7. Luftreiniger nach Anspruch 3, bei welchem der Lüfter an seiner Rückseite mit einer eine Resonanz verhindernden Einrichtung versehen ist.

8. Luftreiniger nach Anspruch 7, bei welchem die eine Resonanz verhindernde Einrichtung ein Schwungrad ist.

## Revendications

1. Système d'épuration d'air, comprenant :
(1) une ossature de profilés en H reliés entre eux, dont les cavités sont tournées vers le haut et dans lesquels est placé un liquide d'étanchéité,
(2) plusieurs modules de filtre à air dont chacun comprend un filtre à air et comporte un cadre périphérique comportant un profilé continu en U qui présente une cavité tournée vers le haut et dans lequel est placé un liquide d'étanchéité, tandis que la cavité, tournée vers le haut, de ce profilé en U reçoit le bord inférieur du profilé en H, et
(3) plusieurs modules de ventilateur dont chacun comporte un rotor de ventilateur, un carter contenant ledit rotor de ventilateur et une enceinte contenant ledit carter, un module de ventilateur étant disposé à l'arrière de chacun des modules de filtre à air et comportant un cadre périphérique comportant un prolongement continu, à disposition verticale, qui prend appui dans la cavité, tournée vers le haut, du profilé en H.

2. Système d'épuration d'air suivant la revendication 1, dans lequel le module de filtre à air est de faible épaisseur et léger.

3. Système d'épuration d'air suivant la revendication 1, dans lequel le module de ventilateur est de faible épaisseur et léger.

4. Système d'épuration d'air suivant la revendication 3, dans lequel le ventilateur est un ventilateur du type à hélice.

5. Système d'épuration d'air suivant la revendication 3, dans lequel le ventilateur est un ventilateur sirocco.

6. Système d'épuration d'air suivant la revendication 3, dans lequel l'enceinte du module de ventilateur est pourvue de moyens d'absorption des vibrations et du bruit.

7. Système d'épuration d'air suivant la revendication 3, dans lequel le ventilateur est pourvu, à l'arrière, d'un dispositif empêchant la résonance.

8. Système d'épuration d'air suivant la revendication 7, dans lequel le dispositif empêchant la résonance est un volant.

# FIG. 1

# FIG. 2

EP 0 336 455 B1

# FIG. 3

# FIG. 4

# FIG. 5

8

# FIG. 6

EP 0 336 455 B1

# FIG. 7

# FIG. 8